# EUROPEAN PATENT APPLICATION

(11) **EP 3 338 878 A1**
(43) Date of publication of application: **27.06.2018**
(21) Application number: 16206897.7
(22) Date of filing: 24.12.2016
(51) Int. Cl.: B01D 61/42, E02D 7/26, B01D 61/56, E02D 27/42, F03D 13/25, E02B 17/00

(54) **WIND TURBINE FOUNDATION**

(71) Applicant: Ørsted Wind Power A/S, 7000 Fredericia (DK)
(72) Inventor: SCHUPP, Jens, 22605 Hamburg (DE)
(74) Representative: Gaunt, Thomas Derrick

(57) **Abstract**

The present invention relates to a wind turbine foundation for installation into a soil, the wind turbine foundation having a top, comprising a hollow metal part having a first end part being open and a second end part, the second end part being arranged nearest the top, and the hollow metal part having an inner face and an outer face, a first electrode configured to function as an anode and arranged on the outer face of the first end part of the hollow metal part, and a first electric insulator arranged between the first electrode and the hollow metal part. The present invention also relates to a wind turbine installation, to a method of installing a wind turbine foundation according to the present invention, to a method of strengthening the soil surrounding the wind turbine foundation according to the present invention and to a method of retracting the wind turbine foundation according to the present invention.

## Description

### Field of the invention

The present invention relates to a wind turbine foundation for installation into a soil. Furthermore, the present invention also relates to a wind turbine installation, to a method of installing a wind turbine foundation according to the present invention, to a method of strengthening the soil surrounding the wind turbine foundation according to the present invention and to a method of retracting the wind turbine foundation according to the present invention.

### Background art

When installing a wind turbine foundation, such as a monopile, the monopile is hammered into the soil to penetrate the soil until a sufficient depth is attained for maintaining the wind turbine firmly fastened at that location without it moving in rough weather with heavy winds and large waves. One of the most efficient ways of ensuring that the monopile comes sufficiently deep into the ground is by hammering on the top of the monopile; however, the hammering creates so much noise that marine biologist fear that sea mammals living in the water get too stressed or even die from the noise caused by the monopile hammering. Thus, when installing such foundations by hammering, the sites are noise-reduced to protect the surroundings. However, such noise reduction facilities are both cost-intensive and time-consuming to set up, and thus the costs of installing the foundation are substantially increased.

### Summary of the invention

It is an object of the present invention to wholly or partly overcome the above disadvantages and drawbacks of the prior art. More specifically, it is an object to provide an improved wind turbine foundation which minimises the noise when installing the foundation into the soil.

The above objects, together with numerous other objects, advantages and features, which will become evident from the below description, are accomplished by a solution in accordance with the present invention for a wind turbine foundation for installation into a soil, the wind turbine foundation having a top, comprising:
- a hollow metal part having a first end part being open and a second end part, the second end part being arranged nearest the top, and the hollow metal part having an inner face and an outer face,
- a first electrode configured to function as an anode or cathode and arranged on the outer face of the first end part of the hollow metal part, and
- a first electric insulator arranged between the first electrode and the hollow metal part.

By having an electrode arranged in the first end part of the hollow metal part and electrically insulated therefrom, an electro osmosis process can be established either by applying electricity to the electrode or to the hollow metal part. Most often an electric potential is created by applying electricity to the electrode. If negative voltage is applied to the electrode, the electrode functions as the anode and the hollow metal part functions as the cathode, and if positive voltage is applied, the electrode is the cathode and the hollow metal part is the anode. The cathode draws in water thus providing the lubricating effect around the hollow metal part, so that the hollow metal part is more easily pushed down into the soil.

By having an electrode arranged in the first end part of the hollow metal part and electrically insulated therefrom, the friction between foundation and surrounding soil, i.e. the steel-soil interface, is thus reduced. This is performed by attracting water to lubricate during installation, and thus ions migrate to the face of the hollow metal part.

By reversing the electro osmosis process, the friction can be restored or even further enhanced after installation or during the end of the operation to strengthen the soil again. The soil may also be strengthened in case of insufficiently strong soil, and such strengthening may make installation possible at locations where prior art installation is not possible due to too weak soil.

Thus, in order to meet the requirements and the calculations, the soil may be weakened/strengthened, in case the foundation is too stiff/soft i.e. migration option in clay if the eigenfrequency is not quite as calculated. Furthermore, the soil may by re-strengthened/weakened if the cyclic loading effects have reduced the soil strength due to pore pressure accumulations.

Thus, the first electrode may be configured to function as an anode or a cathode in an electro osmosis process.

A second electrode may be arranged on the inner face of the first end part of the hollow metal part and a second insulator may be arranged between the second electrode and the hollow metal part.

Moreover, the hollow metal part may be configured to function as a cathode when installing the wind turbine foundation in the soil for enabling electro osmosis.

Also, the first electrode may be electrically connected to a power supply.

Furthermore, the first end part of the hollow metal part may have a first recess in the outer face in which the first electrode is arranged.

The first electrode may be made of copper or another type of electrically conductive metal.

In addition, the first end part of the hollow metal part may have a second recess in the inner face in which the second electrode is arranged.

The wind turbine foundation according to the present invention may further comprise a tube for supplying liquid to the first electrode for filling out a space opposite the first electrode.

The liquid may comprise a chemical enhancing the electric conductivity.

Thus, the liquid may be saline or a buffer or acid supplied through the tube. The liquid may also be more solidified, such as in the form of a paste, or contain fine particles, or even be thixotropic, e.g. forming a solid gel when left alone - or be viscous if stirred. The recess may also be filled with a sponge.

Moreover, the liquid may be supplied with a chemical for cementing or hardening the soil. This may be accomplished by an agent initiating the precipitation.

Further, the hollow metal part may be a monopile.

Also, the hollow metal part may be a bucket, such as a suction bucket.

The wind turbine foundation according to the present invention may further comprise a third electrode arranged on the outer face between the first end part and the second end part.

Further, the electrode may be a layer applied on the outer face and/or the inner face.

In addition, electric insulation may be applied as a layer on the outer face and/or the inner face.

Furthermore, the electric insulation layer may extend to the first end part of the hollow metal part. In this way, the hollow metal part is electrically insulated from the electrode and the electrode may function as the cathode and the hollow metal part as the anode.

Moreover, the electrode may be coated on the outer face and/or the inner face.

In addition, the electric insulation may be coated on the outer face and/or the inner face.

Additionally, the hollow metal part may be grounded, i.e. at a zero volt potential.

Further, a negative or positive voltage may be applied to the electrode.

The wind turbine foundation may be an offshore wind turbine foundation.

Furthermore, the recess may have a depth of at least 1 mm, preferably at least 0.5 cm.

The wind turbine foundation according to the present invention may further comprise a transition piece arranged at the top.

The wind turbine foundation according to the present invention may further comprise secondary electrodes arranged in the soil after installation.

Also, the hollow metal part may have a length of at least 10 m.

In the event that the hollow metal part is a bucket, the length being the vertical length may be 6 - 12 metres, preferably 8-10metres.

Moreover, the hollow metal part may be round and may have a diameter below 15 m, preferably more than 8 metres.

The present invention further relates to a wind turbine installation comprising a wind turbine foundation according to the present invention and a wind turbine installed on the top of the wind turbine foundation.

The wind turbine foundation may also be an offshore foundation for any kind of offshore installation, such as an oil rig, a power plant, substations, sub sea templates, or an onshore installation, such as an onshore pile foundation, tubular pile foundations and sheet pile walls, as well as dolphin piles.

Also, the present invention relates to a method of installing a wind turbine foundation according to the present invention into a soil, comprising:
- providing a first electrode and a first insulator on the outer face of the first end part of the hollow metal part,
- arranging the wind turbine foundation so that the first end part and the first electrode are in the soil,
- applying a voltage to the first electrode so that the first electrode functions as an anode and the hollow metal part as a cathode, and
- driving the wind turbine foundation into the soil by electro osmosis.

Said method may further comprise providing ballast on the top of the wind turbine foundation for assisting in driving the wind turbine foundation into the soil.

Also, the method may comprise applying liquid to the first electrode during driving of the wind turbine foundation into the soil.

Moreover, the driving of the wind turbine foundation may be performed without hammering and/or suction.

The voltage may be shut off during the driving of the wind turbine foundation and subsequently applied again after a period of time, thereby increasing the driving speed.

The present invention also relates to a method of reinforcing or strengthening the soil surrounding the wind turbine foundation according to the present invention, comprising applying a positive electric potential to a third electrode so that it functions as an anode.

Finally, the present invention relates to a method of retracting the wind turbine foundation according to the present invention at least partly from the soil, comprising applying a negative electric potential to the first electrode while pulling the wind turbine foundation at the top.

### Brief description of the drawings

The invention and its many advantages will be described in more detail below with reference to the accompanying schematic drawings, which for the purpose of illustration show some non-limiting embodiments and in which
Fig. 1 shows a partly cross-sectional view of a wind turbine foundation,
Fig. 2A shows a wind turbine foundation ready to be installed by electro osmosis,
Fig. 2B shows the wind turbine foundation of Fig. 2A after installation by electro osmosis,
Fig. 2C shows a wind turbine being installed on top of the wind turbine foundation of Fig. 2B,
Fig. 3 shows a cross-sectional view of part of a hollow metal part of a wind turbine foundation,
Fig. 4 shows a cross-sectional view of part of another hollow metal part of a wind turbine foundation,
Fig. 5A shows a monopile foundation,
Fig. 5B shows one jacket structure foundation on piles,
Fig. 5C shows one jacket structure foundation with suction buckets,
Fig. 6 shows a cross-sectional view of yet another wind turbine foundation, and
Fig. 7 shows a cross-sectional view of yet another wind turbine foundation.

All the figures are highly schematic and not necessarily to scale, and they show only those parts which are necessary in order to elucidate the invention, other parts being omitted or merely suggested.

### Detailed description of the invention

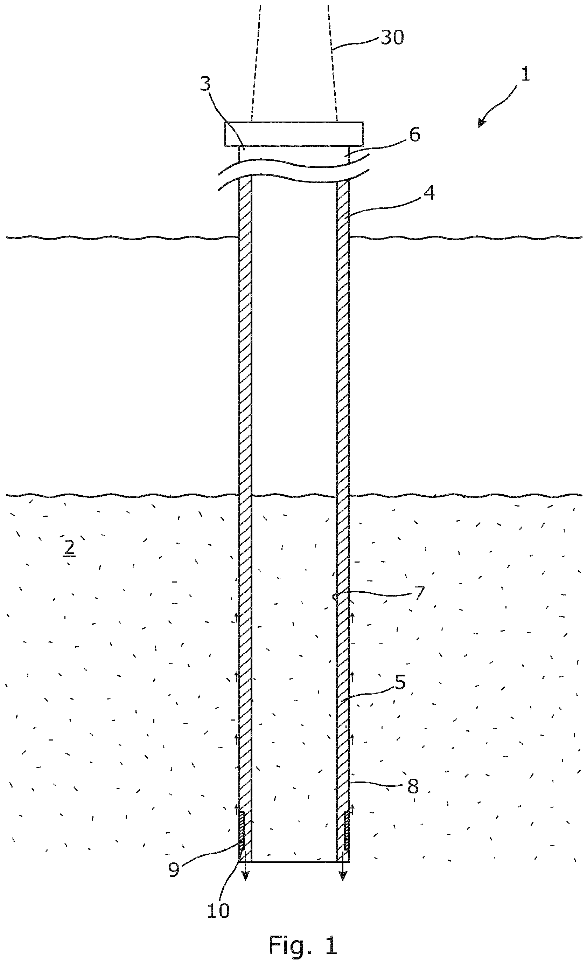

Fig. 1 shows a wind turbine foundation 1 for installation into a soil 2 for installation of a wind turbine 30 firmly into the soil. The wind turbine foundation 1 has a top 3 and comprises a hollow metal part 4 having a first end part 5 being open and a second end part 6 arranged nearest the top. The hollow metal part has an inner face 7 and an outer face 8. A first electrode 9 configured to function as an anode is arranged on the outer face of the first end part of the hollow metal part, and a first electric insulator 10 is arranged between the first electrode and the hollow metal part to electrically insulate the hollow metal part from the electrode. The hollow metal part 4 is grounded, i.e. has zero potential, and by applying electricity in the form of approximately 100-300 V to the electrode 9, the liquid in the soil moves towards the outer face 8 of the hollow metal part, lubricating the outer face and forcing the wind turbine foundation 1 downwards just by the weight, e.g. a ballast, provided at the top and the weight of the hollow metal part itself since the hollow metal part functions as a cathode due to its zero potential.

By having a first electrode in the first end furthest away from the top and the hollow metal part being grounded, the wind turbine foundation 1 can be installed by means of electro osmosis only, i.e. by electro osmosis and the weight applied. Electro osmosis is the motion of liquid induced by an applied electric potential across a material, i.e. the soil. When only using electro osmosis and the force of gravity, no significant noise is generated, and then no further noise reduction facilities are necessary. Furthermore, when the wind turbine foundation can be installed without hammering on the top, the wall of the hollow metal part may possibly be made a bit thinner which results in cost savings in terms of material.

The electro osmosis process can be established either by applying electricity to the electrode or to the hollow metal part creating an electric potential there between and thus across the soil. Most often an electric potential is created by applying electricity to the electrode so that the main part of the foundation has a zero potential. If negative voltage is applied to the electrode, the electrode functions as the anode and the hollow metal part functions as the cathode, and if positive voltage is applied to the electrode, the electrode is the cathode and the hollow metal part is the anode. The cathode draws in water thus providing a lubricating effect around the hollow metal part, so that the hollow metal part is more easily pushed down into the soil. Furthermore, the soil just below the hollow metal part is likewise softened so that the soil underneath the construction is easier displaced. Thus, the friction between foundation and surrounding soil, i.e. the steel-soil interface, is thus reduced. This is performed by attracting water to the hollow metal part to lubricate during installation, and thus ions migrate to the face of the hollow metal part. The liquid in the soil is thus repelled from the anode along the electrical field lines creating an electroosmotic flow.

By reversing the electro osmosis process, the friction can be restored or even further enhanced after installation or during the end of the operation to strengthen the soil again or strengthen the soil even more than before installation. The soil may also be strengthened in case of insufficiently strong soil, and such strengthening may make installation possible at locations where prior art installation is not possible due to too weak soil.

In order to meet the requirements and the calculations for such an installation, the soil may be weakened/strengthened, in case the foundation is too stiff/soft, i.e. a migration option in clay, if the eigenfrequency of the wind turbine installation is not quite as calculated. Thus, the eigenfrequency of the wind turbine installation can be easily adjusted after installation. Furthermore, the soil may by re-strengthened/weakened if the cyclic loading effects have reduced the soil strength due to pore pressure accumulations.

Furthermore, by hammering down onto the foundation in order to install it in the ground/soil, there is always a small risk that the material is somewhat weakened and that the hitting on the foundation becomes somewhat out of alignment. This is also avoided by using electro osmosis. In addition, by using merely electro osmosis and gravity, a suction bucket solution could be free from grout as is known from prior art suction bucket installations. The installation using electro osmosis has also shown to be a fast and reliable way of installing the foundation for a wind turbine.

The pore fluid or liquid phase in the soil follows the electric field lines created by the electrode. It is pushed into the soil away from the anode to follow an arched path towards the cathode. The water/liquid along the electric field line starts shifting simultaneously as soon as electricity is applied. This results in an instantaneous lubrication of the cathode, and if the water cannot drain away, the water will over time soften the soil in the vicinity of the cathode due to excess pore pressure building up. Because of the short distance between cathode and anode, the electric field strength is very strong, resulting in a fast water flow and hence in a fast softening of the soil close to the pile toe (for piles) or skirt tip (for buckets) at the first end part 5. This will reduce the pile toe resistance.

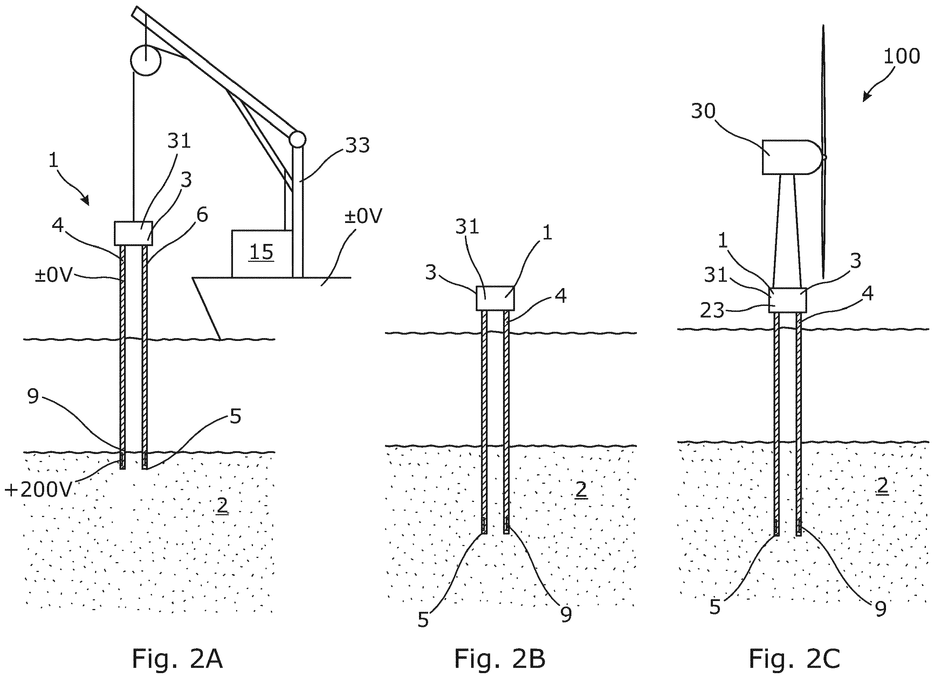

In Fig. 2A, the wind turbine foundation 1 has a ballast 31 arranged on top of the foundation and the first electrode 9 is supplied with electricity by a power supply 15 on the installation vessel 33 of approximately 200 V resulting in a 200 V potential between the hollow metal part 4 and the first electrode 9. In Fig. 2A, the hollow metal part has slightly submerged into the soil, so that the first electrode is covered with soil and the wind turbine foundation 1 is ready to be installed by means of electro osmosis. The first electrode acts as an anode which forces the liquid in the soil away from the anode towards the cathode which is the hollow metal part 4, resulting in the outer face of the hollow metal part being lubricated while being forced by gravity deep into the soil as shown in Fig. 2B. In Fig. 2C, a wind turbine 30 has been installed on top of a transition piece 23 which could function as the ballast 31. Thus, a wind turbine installation 100 is shown in Fig. 2C.

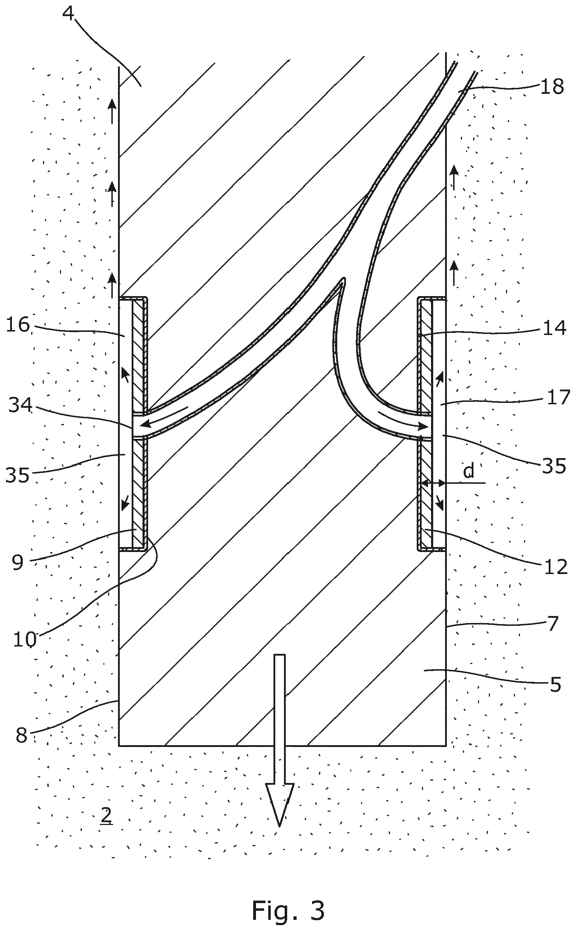

In order to also lubricate the inner face of the hollow metal part 4, the wind turbine foundation may further comprise a second electrode 12 arranged on the inner face of the first end part 5 of the hollow metal part 4 as shown in Fig. 3. A second insulator 14 is arranged between the second electrode 12 and the hollow metal part 4 in order to electrically insulate the hollow metal part 4 from also the second electrode so that the second electrode also functions as an anode when voltage is applied to the second electrode while maintaining the hollow metal part at zero potential. The first end part 5 of the hollow metal part 4 has a first recess 16 in the outer face 8 in which the first electrode 9 is arranged. Furthermore, the first end part of the hollow metal part has a second recess 17 in the inner face in which the second electrode is arranged. The first electrode 9 and the second electrode 12 are thus protected while the hollow metal part is forced downwards into the soil. Furthermore, a tube 18 is fluidly connected with both the first recess 16 and the second recess 17 for supplying liquid, such as sea water, to the first electrode and the second electrode, respectively. This supply of liquid is performed for filling out a space 35 formed by the recess opposite the electrodes. When the electrodes 9, 12 being anodes push water away from the anode, the space 35 would be subjected to a reduction in pressure, drawing the soil closer to the electrodes which would inhibit the function of the electrodes, and therefore by applying the water this is avoided. The tube 18 has an outlet 34 in fluid communication with the recess and an inlet (not shown) in fluid communication with a pump (not shown). The small arrows in Fig. 3 illustrate the flow of liquid and the big arrow illustrates the downward movement of the wind turbine foundation. The recess has a depth d of at least 0.5 cm, preferably of at least 1 cm.

Furthermore, the tube 18 could be the electric conductor leading electricity to the first electrode 9 and the second electrode 12. Thus, the tube 18 could be made in an electrically conducting material.

In order to enhance the lubrication effect, the liquid supplied in the tube 18 could comprise a chemical that enhances the electric conductivity. Thus, the liquid may be saline, a buffer or acid supplied through the tube 18. The liquid may also be more solidified, such as in the form of a paste, or contain fine particles. The liquid may even be thixotropic, e.g. forming a solid gel after a certain time period, when not stirred or be viscous if stirred. The recess may also be filled with some kind of sponge material. This is especially useful if the foundation is to be installed through sand layers, since the sand might otherwise fill the recess, or if installed in clay to avoid that the clay squeezes around the corner of the recces and starts filling the recess. Thus, it may be avoided that the clay gets into contact with the anode as it would immediately start to stick to the anode. The same applies by introducing a sponge. Furthermore, the sponge itself does not necessarily need to be electrically conductive as the liquid in the sponge would be electrically conductive.

Furthermore, in the last part of the installation of the hollow metal part 4 of the wind turbine foundation, the liquid could be supplied with a cementing or hardening agent to cement or harden the soil surrounding the hollow metal part of the wind turbine foundation. The agent may thus be an agent initiating precipitation on the grains and thus stiffening the soil. Thus, chemicals may be supplied to migrate into the soil for cementing a volume of soil by e.g. forcing Ca(OH)⁺ ions into the soil, which will cause calcium bonds between the grains. The chemicals may be supplied to migrate into the soil for changing the soil chemistry/salinity, e.g. when having quick clay problems.

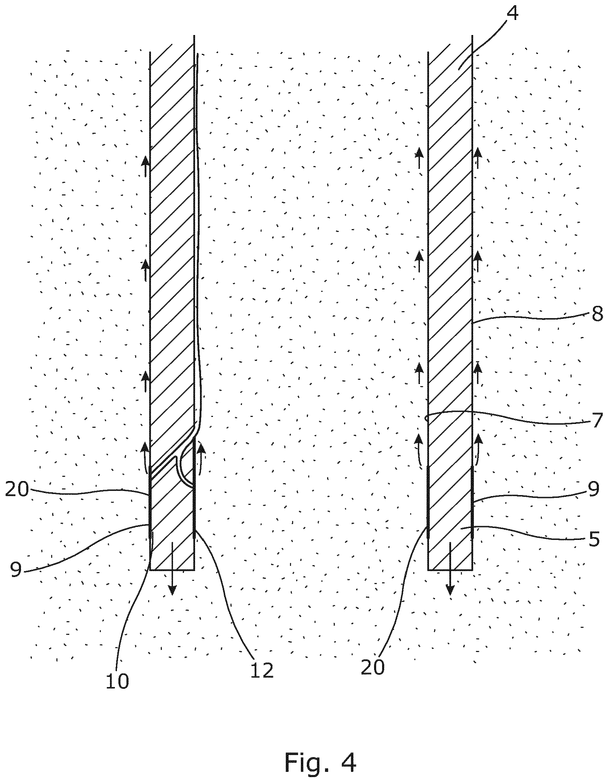

In Fig. 4, the first and second electrodes 9, 12 are formed as a layer 20 applied on the outer face e.g. by paint or as a coating. The layers 20 are in an electrically conductive material and are, in the same way as in Fig. 3, electrically insulated from the hollow metal part and are electrically connected to a power supply. In another embodiment, the area around the electrode may be coated with an electrically conductive material to distribute the anode effect even more. The electrodes may thus be metal sheets arranged around the hollow metal part and arranged on the inner face of the hollow metal part. The coating may be zinc or gold plated etc. to reduce or prevent corrosion or for other protective reasons. The coating must be electrically conductive. Adjacent each electrode, a layer having a resistance may be applied on the outer/inner face in order to even out the electro osmosis effect along the length of the hollow metal part.

Furthermore, a vent tube (not shown) may be fluidly connected with both the first recess 16 and the second recess 17 for allowing gas produced near the anode. In addition, after having installed the foundation the tube 18 for transmitting liquid and/or the vent tube may be filled with grout or similar material.

In a further aspect, the cathode is coated adjacent to the anode with a material with a specific resistivity to force the electric field away from the anode and to limit short circuiting. This adjacent coated area might also be recessed or purposely protrude from the surface. The extent of this area might range from a few centimetres to a few metres. The coating could also be designed to gradually reduce in electric resistivity and may start with several layers next to the anode and then reduce to a single layer or different coating material in the distance.

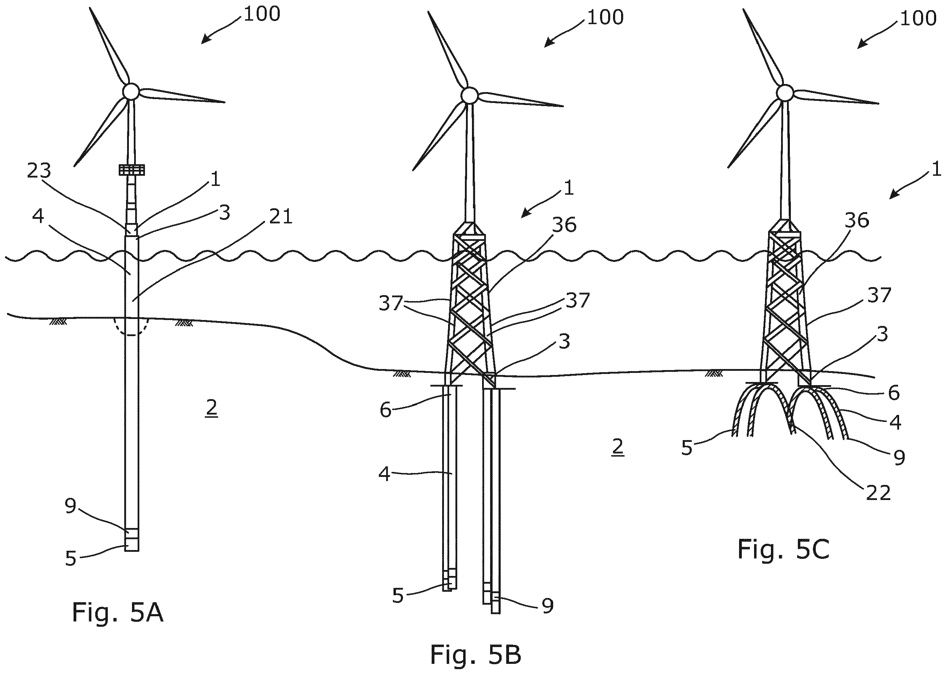

The hollow metal part may be a monopile 21 as shown in Fig. 5A, and in Fig. 5B a jacket structure 36 is arranged so that each leg 37 of the jacket structure is arranged on a hollow metal part 4 as described above having at least a first electrode 9 in the first end part 5. The hollow metal part 4 may also be a suction bucket 22 as shown in Fig. 5C where each leg 37 of the jacket structure is arranged on a suction bucket 22.

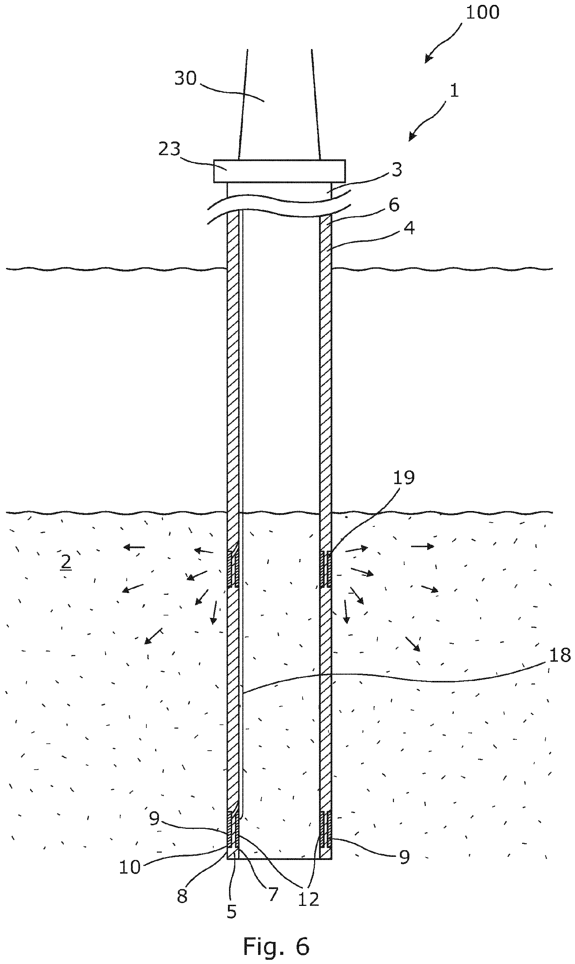

In order to be able to consolidate the soil after the wind turbine foundation 1 has been installed at the desired depth, the wind turbine foundation 1 further comprises a third electrode 19 arranged on the outer face between the first end part and the second end part, as shown in Fig. 6. By turning off electricity to the first and second electrodes 9, 12 and applying a positive potential to the third electrode, which is also electrically insulated from the hollow metal part 4, the third electrode functions as the anode and the hollow metal part, the first electrode and the second electrode function as the cathode. Hereby, the water in the soil will be forced away from the third electrode as indicated by the arrows, and the soil around the third electrode will by dried from water/liquid and thus consolidated to strengthen the soil formation.

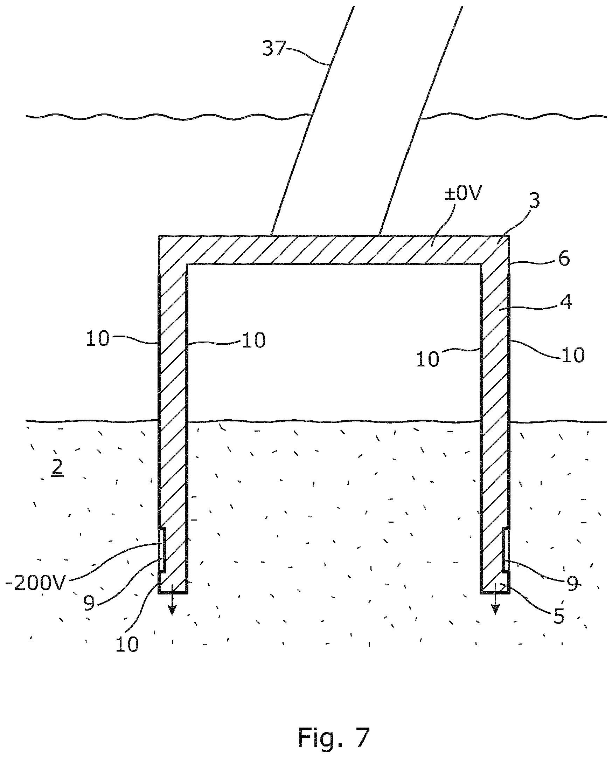

In Fig. 7, the hollow metal part 4 of the foundation is partly covered by the first electric insulator 10, i.e. the inner face and the outer face are covered but not the top 3. The hollow metal part in contact with the soil is thus electrically insulated from the top 3 of the foundation. The first electrode is arranged in the first end part 5 on the outer face of the first electric insulator 10. By applying electricity, i.e. applying a negative voltage to the first electrode, the electrode functions as the cathode retracting water to increase the lubrication along the hollow metal part 4. Several electrodes may be installed on the outer face and/or inner face of the hollow metal part 4, and thus the area of the hollow metal part being covered by a cathode is increased, and hence the lubrication is further increased. In Fig. 7, the first electrode thus functions as the cathode while the foundation is installed due to the fact that the main part of the hollow metal part 4 in contact with the soil is electrically insulated. The jacket leg 37 applies a ballast and thus provides necessary load on the foundation while providing the electro osmosis process to submerge the hollow metal part into the soil.

The wind turbine foundation 1 is, in Fig. 1, an offshore wind turbine foundation, but may also be a wind turbine foundation for onshore installation. It may also be a foundation for other offshore structures, such as substations, oil rigs, or other structures know to a person skilled in the art.

Furthermore, he hollow metal part has a length of at least 20 m and is preferably round having a diameter of at between 6 - 12 m, more preferably a diameter of 8-10 m.

A wind turbine foundation is installed into the soil by first providing a first electrode and a first insulator on the outer face of the first end part of the hollow metal part, then arranging the wind turbine foundation so that the first end part and the first electrode are in the soil, thus covering the first electrode. Subsequently, a voltage is applied to the first electrode so that the first electrode functions as an anode and the hollow metal part as a cathode, and then the wind turbine foundation is driven into the soil mainly by electro osmosis. The force of gravity will also contribute to the driving of the wind turbine foundation into the soil. Furthermore, to increase the force of gravity and thus the speed of the installation, a ballast 31 (as shown in Fig. 2A) may be provided on the top of the wind turbine foundation for assisting in driving the wind turbine foundation into the soil.

In order to ensure the optimal function of at least the first electrode, liquid may be applied down e.g. the tube to the first electrode during driving of the wind turbine foundation into the soil. Thus, driving of the wind turbine foundation into the soil is performed without hammering and/or suction. Normally, buckets are sucked into the soil, but such equipment for providing such substantial suction ability can also be avoided or downsized, thus providing a less costly installation.

In order to increase the driving speed, the voltage may be shut off during the last part of the driving operation and subsequently applied again after a period of time. Tests have shown that such an operation can in some circumstances increase the speed with which the wind turbine foundation is driven into the soil.

After the wind turbine foundation has been properly installed at the desired depth, the soil surrounding the foundation may be reinforced and strengthened by applying a positive electric potential to a third electrode so that it functions as an anode. The high voltage is no longer applied to the first and second electrodes which may in some cases be electrically shut off, so that the first and second electrodes together with the hollow metal part function as the cathode and the electro osmosis is "reversed".

When reversing the electro osmosis process, the water/liquid in the soil or clay around the hollow metal part starts moving away from the hollow metal part as the hollow metal part functions as an anode which strengthens the soil/clay. Due to the fact that the water has caused some erosion, the eroded metal will have an increased friction which causes the hollow metal part to become more fastened in the soil than in prior art solutions. As the wind turbine mounted on top of the foundation, e.g. a jacket structure with each leg mounted on a suction bucket, is influenced by great forces from the wind, one suction bucket is influenced by a traction force and another by a compression force. By the strengthening the soil around each bucket and by the created erosion, each bucket is more firmly fastened in the soil, and the size of the bucket diameter can be reduced saving cost for material, and the buckets can thus be handled by smaller vessels during installation.

Furthermore, the soil or clay surrounding the hollow metal part may after e.g. a storm be re-strengthened. The great forces during a storm may cause the grains in the soil to be displaced, and by turning on the electro osmosis process and reversing the process, the soil may be re-strengthened.

When installing the foundation, the soil may be softened to adjust or level the foundation, e.g. soften the soil around one suction bucket. After a heavy storm, re-levelling may also be required by softening some areas slightly and/or strengthening other areas.

In the event that the wind turbine foundation is to be retracted from the soil, this may be performed by applying a negative electric potential to the first electrode while pulling the wind turbine foundation at the top. This will simplify an often very complicated and costly operation. Prior art solutions for retraction of the foundation are very costly and therefore often reduced to just cutting off the monopile or suction bucket and leaving the remaining part in the ground. By the present invention, such retraction will therefore make retraction cheaper and thus even possible, instead of the wind turbine foundation being left behind in the seabed.

When reference is made to soil, it may also be clay, limestone, sand or any type of ground material into which an offshore or onshore foundation is to penetrate. The soil has a varying profile of a mixture of minerals, organic matter, gases, liquids, and countless organisms.

Furthermore, a hollow metal part may have any tubular form being open in at least one end, such as a monopile or a bucket, also called a suction bucket.

Although the invention has been described in the above in connection with preferred embodiments of the invention, it will be evident for a person skilled in the art that several modifications are conceivable without departing from the invention as defined by the following claims.

## Claims

1. A wind turbine foundation (1) for installation into a soil (2), the wind turbine foundation having a top (3), comprising:
- a hollow metal part (4) having a first end part (5) being open and a second end part (6), the second end part being arranged nearest the top, and the hollow metal part having an inner face (7) and an outer face (8),
- a first electrode (9) configured to function as an anode or cathode and arranged on the outer face of the first end part of the hollow metal part, and
- a first electric insulator (10) arranged between the first electrode and the hollow metal part.

2. A wind turbine foundation according to claim 1, wherein a second electrode (12) is arranged on the inner face of the first end part of the hollow metal part and a second insulator (14) is arranged between the second electrode and the hollow metal part.

3. A wind turbine foundation according to claim 1 and/or 2, wherein the hollow metal part is configured to function as a cathode when installing the wind turbine foundation in the soil for enabling electro osmosis.

4. A wind turbine foundation according to any of the preceding claims, wherein the first electrode is electrically connected to a power supply (15).

5. A wind turbine foundation according to any of the preceding claims, wherein the first end part of the hollow metal part has a first recess (16) in the outer face in which the first electrode is arranged.

6. A wind turbine foundation according to claim 2, wherein the first end part of the hollow metal part has a second recess (17) in the inner face in which the second electrode is arranged.

7. A wind turbine foundation according to any of the preceding claims, further comprising a tube (18) for supplying liquid to the first electrode.

8. A wind turbine foundation according to any of the preceding claims, further comprising a third electrode (19) arranged on the outer face between the first end part and the second end part.

9. A wind turbine foundation according to any of the preceding claims, wherein the electrode is a layer (20) applied on the outer face.

10. A wind turbine foundation according to any of the preceding claims, wherein the hollow metal part is grounded.

11. A wind turbine installation (100) comprising a wind turbine foundation (1) according to any of the preceding claims and a wind turbine (30) installed on the top of the wind turbine foundation.

12. A method of installing a wind turbine foundation (1) according to any of the claims 1-10 into a soil, comprising:
- providing a first electrode (9) and a first insulator (10) on the outer face of the first end part of the hollow metal part,
- arranging the wind turbine foundation so that the first end part and the first electrode are in the soil,
- applying a voltage to the first electrode so that the first electrode functions as an anode and the hollow metal part as a cathode, and
- driving the wind turbine foundation into the soil by electro osmosis.

13. A method according to claim 12, further comprising providing ballast (31) on the top of the wind turbine foundation.

14. A method according to claim 12 and/or 13, wherein the driving of the wind turbine foundation is performed without hammering and/or suction.

15. A method of strengthening the soil surrounding the wind turbine foundation according to any of the claims 1-10, comprising applying a positive electric potential to a third electrode (19) so that it functions as an anode.

16. A method of retracting the wind turbine foundation according to any of the claims 1-10 at least partly from the soil, comprising applying a negative electric potential to the first electrode.
